# DEMANDE DE BREVET EUROPEEN

(11) **EP 0 818 896 A1**
(43) Date de publication de la demande: **14.01.1998**
(21) Numéro de dépôt: 97401616.4
(22) Date de dépôt: 07.07.1997
(51) Int. Cl.: H04B 10/18

(54) **Système de transmission optique de données en format soliton**

(30) Priorité: 10.07.1996 FR 9608614
(71) Demandeur: Alcatel Submarine Networks, 92110 Clichy (FR)
(72) Inventeur: Brun-Maunand, Elisabeth, 75013 Paris (FR); Marcerou, Jean-François, 91100 Corbeil-Essonnes (FR)
(74) Mandataire: Lamoureux, Bernard

(57) **Abrégé**

L'invention concerne un système de transmission de signaux numériques sur une longue distance à l'aide d'un conducteur optique (20). Les signaux sont sous la forme d'impulsions Soliton. Ce système comprend des moyens pour minimiser les déformations des impulsions Soliton transmises.

Les moyens de minimisation comprennent, en combinaison, d'une part, un modulateur de phase (21) s'opposant à la gigue temporelle de l'impulsion Soliton, et, d'autre part, pour s'opposer à l'altération du rapport signal à bruit de l'impulsion, un ensemble de filtres (22 ..., 22ₙ) du type à fréquence variable avec l'emplacement dudit filtre, ou un ensemble d'éléments à absorbants saturables.

L'invention est applicable notamment aux communications optiques transocéaniques.

## Description

L'invention est relative à un système de transmission optique de données.

Les transmissions de données sur de longues distances, notamment les transmissions téléphoniques transocéaniques, s'effectuent de plus en plus par la voie optique en utilisant des fibres optiques. Par rapport à une transmission du type électrique, les avantages sont notables ; en particulier les pertes sont faibles et les déformations de signaux sont moindres.

Pour de tels systèmes de télécommunication, notamment pour les télécommunications sous-marines, on cherche à augmenter de plus en plus le débit tout en conservant la qualité de signal et en restant dans des limites raisonnables de coût.

Les données transmises par des systèmes de communication optique sont sous forme binaire, c'est-à-dire que l'information est représentée par des "0" et des "1". La forme des signaux transmis affecte de façon décisive les performances du système de transmission, les pertes et le bruit dépendant de la forme de ces signaux.

Jusqu'à présent, les signaux numériques binaires sont transmis principalement en format NRZ, c'est-à-dire sous forme de signaux rectangulaires, les "O" étant habituellement le niveau bas, et les "1" le niveau haut. Pour des "1" successifs, le signal reste au niveau haut et ne retourne pas au niveau 0, ou niveau bas (d'où le nom du format NRZ "non return to zero").

On a récemment étudié des formats permettant d'améliorer les performances des communications. Le format considéré le plus souvent est aujourd'hui le format Soliton. Dans ce format, les 1 sont des impulsions, en général positives (Soliton brillant), et les 0 sont le niveau bas. Entre deux 1 successifs, c'est-à-dire entre deux impulsions Soliton, le signal repasse par le niveau bas.

En fonction du temps, les impulsions Soliton ont la forme de l'inverse du carré d'un cosinus hyperbolique. La puissance crête et la largeur à mi-hauteur de cette impulsion Soliton sont liées par une relation précise qui dépend des caractéristiques de la fibre, à savoir l'indice n₂ de Kerr et la dispersion D. L'indice n₂ est la partie de l'indice de réfraction qui est non linéaire, c'est-à-dire qui dépend de la puissance du signal optique. Cette relation entre la puissance crête et la largeur à mi-hauteur est telle que les effets de la dispersion et de la non-linéarité se compensent. Ainsi, cette forme d'impulsion ne s'élargit pas lors de la propagation malgré la dispersion chromatique, inévitable, dans les fibres optiques.

Toutefois, les systèmes de transmission optique utilisant des impulsions Soliton sont affectés de bruits qu'il faut éliminer. Les bruits sont, d'une part, les fluctuations d'amplitude des impulsions Soliton et, d'autre part, les fluctuations de position temporelle des impulsions. Ces fluctuations (ou gigues) temporelles ont pour origine les fluctuations aléatoires de la longueur d'onde centrale des impulsions Soliton qui sont dues à l'interaction non linéaire entre ces impulsions et le bruit d'émission spontanée des amplificateurs optiques (ou répéteurs) se trouvant sur la ligne de transmission ; cette gigue temporelle est, en outre, influencée par la dispersion et elle augmente avec la longueur de la ligne et avec le nombre de répéteurs. On rappelle ici qu'un répéteur est un amplificateur optique destiné à fournir sur sa sortie une puissance déterminée de signal optique, l'amplification compensant l'atténuation, inévitable, du signal optique transmis par une fibre optique.

Pour diminuer ou éliminer les fluctuations ou gigues des impulsions Soliton, on connaît plusieurs solutions :

Une première solution consiste à prévoir sur la ligne au moins un modulateur qui repositionne l'impulsion dans le temps grâce au signal d'horloge extrait des données. On s'attend aux meilleurs résultats avec un modulateur de phase. Des renseignements complémentaires sur la correction apportée par un tel modulateur de phase se trouvent, par exemple, dans un article de la revue IEEE Photonics Technology letters, volume 8, n°3, mars 1996, pages 455 à 457 intitulé "Gordon-Haus Jitter Suppression Using an Intra-Span Phase Modulator and Post Transmission Dispersion Compensator" (Suppression de la gigue de Gordon-Haus par l'utilisation d'un modulateur de phase en ligne et d'un compensateur de dispersion de transmission à l'aval) de N.J. Smith, N.J. Doran, et W. Forysiak. Cet article mentionne aussi que la correction à l'aide d'un modulateur de phase peut être complétée par un élément de compensation de dispersion.

Cette technique de modulation de phase - qui est une technique de correction de type actif - peut être associée à une compensation passive à l'aide de filtres optiques ayant une longueur d'onde centrée sur la longueur d'onde de la ligne. Ces filtres complètent la stabilisation des Solitons ; mais la stabilisation est seulement partielle, car de tels filtres atténuent nécessairement le signal optique et obligent donc à utiliser des amplificateurs de grand gain qui sont onéreux et peuvent aussi introduire du bruit.

Les études menées par les inventeurs ont montré que l'utilisation d'une régénération active des impulsions Soliton à l'aide d'un modulateur de phase permet de compenser correctement la gigue temporelle mais ne permet ni de corriger de façon satisfaisante les fluctuations d'amplitudes des impulsions Soliton, ni d'empêcher l'accumulation d'ondes dispersives.

Une autre solution pour la compensation, ou correction, des fluctuations des impulsions Soliton dans une ligne de transmission optique consiste à utiliser un filtrage dit glissant, c'est-à-dire un ensemble de filtres répartis sur toute la ligne et dont la longueur d'onde centrale varie du début à la fin de la ligne ; par exemple la longueur d'onde centrale du filtre en début de ligne est la plus faible, et la longueur d'onde du filtre en bout de ligne est la plus élevée. L'utilisation de tels filtres est décrite dans l'article de Linn F. Mollenauer "Soliton Transmission speeds greatly multiplied by sliding-frequency guiding filters" (Les vitesses de transmission sont multipliées dans une grande mesure par les filtres de guidage à fréquence glissante) de la revue Optics and Photonics News, avril 1994, pages 15 à 19.

Un "filtrage glissant" permet de corriger en partie la gigue temporelle des impulsions sans que le bruit augmente avec le nombre de filtres, comme c'est le cas avec le filtrage fixe.

On a constaté que l'utilisation de tels filtres n'était cependant pas entièrement satisfaisante pour la correction des fluctuations temporelles.

L'invention vise à permettre la réalisation d'un système de télécommunications optiques utilisant des impulsions en format Soliton, dans lequel la correction des fluctuations de ces impulsions en amplitude et en position temporelle est particulièrement efficace, et cela afin de permettre une transmission irréprochable sur de longues distances et à très haut débit.

L'invention part de la constatation des limitations de correction en amplitude, mentionnées ci-dessus, de la modulation de phase, éventuellement combinée à un filtrage fixe ou à une compensation de dispersion.

Elle est caractérisée par le fait que, pour corriger les fluctuations des impulsions Soliton, on utilise la combinaison d'un filtrage glissant et d'une modulation de phase. En variante, à la place de filtres glissants, on utilise des éléments à absorption saturable. Pour des explications sur ces composants à absorption saturable, on peut se reporter, par exemple, à l'article intitulé "Increased Amplifiers spacing in a Soliton System with Quantum-Well saturable absorbers and Spectral Filtering" (L'espacement entre amplificateurs est augmenté dans un système Soliton à absorbants saturables à puits quantique et filtrage spectral) de la revue Optics Letters, volume 19, n°19, 1er octobre 1994, pages 1514 à 1516.

Il est à noter que dans l'article de N.J. Smith et autres, de la revue IEEE Photonics Technology Letters, cité plus haut, on suggère que l'utilisation du filtrage glissant n'est pas envisageable en combinaison avec la modulation de phase.

De préférence, le nombre de modulateurs de phase sur la ligne est au plus égal à trois. Toutefois, l'utilisation d'un seul modulateur de phase, préférablement au milieu de la ligne de transmission, est suffisante pour obtenir la correction des fluctuations tant en amplitude qu'en temps des impulsions en format Soliton.

On a constaté qu'avec l'invention, on peut, en outre, diminuer le nombre de répéteurs sur la ligne, toutes choses restant égales par ailleurs.

En effet, on a comparé des systèmes de transmission transocéaniques, de longueurs comprises entre 6 000 et 10 000 kilomètres, présentant un débit de données de 20 Gbits/s, et un facteur de qualité (des impulsions Soliton) Q = 12. Si on utilise un filtrage glissant seul, il est nécessaire de prévoir une distance d'environ 50 kilomètres entre deux répéteurs successifs, un filtre "glissant" étant associé à chaque répéteur.

Si on utilise une modulation de phase associée à des filtres de fréquence fixe, la distance entre répéteurs successifs est d'environ 80 kilomètres pour les mêmes résultats de débit et de facteur de qualité.

Par contre, avec l'invention, si on utilise un seul modulateur de phase au milieu de la ligne, la distance entre deux répéteurs est au minimum de 100 kilomètres, toujours avec les mêmes caractéristiques de débit de 20 Gbits/s et de facteur de qualité 12. Dans cet exemple, un filtre (du filtrage glissant) est aussi associé à chaque répéteur.

D'autres caractéristiques et avantages de l'invention apparaîtront avec la description de certains de ses modes de réalisation, celle-ci étant effectuée en se référant aux dessins ci-annexés, sur lesquels :
la figure 1 est un schéma représentant des impulsions Soliton,
la figure 2 est un schéma d'une installation selon l'invention,
la figure 3 est un schéma illustrant le principe du filtrage glissant utilisé dans l'installation de la figure 2,
la figure 4 est un schéma de principe d'un modulateur utilisé dans l'installation de la figure 2,
la figure 5 est un schéma d'un exemple de modulateur de phase et de la récupération d'Horloge associée,
la figure 6 est un schéma d'autres éléments prévus dans l'installation de la figure 2, et
la figure 7 est un diagramme illustrant des propriétés des éléments de la figure 6.

L'installation qui va être décrite en relation avec les figures est une installation pour la transmission de communications téléphoniques sur des grandes longueurs, notamment à l'aide de câbles à fibre optiques de type immergé.

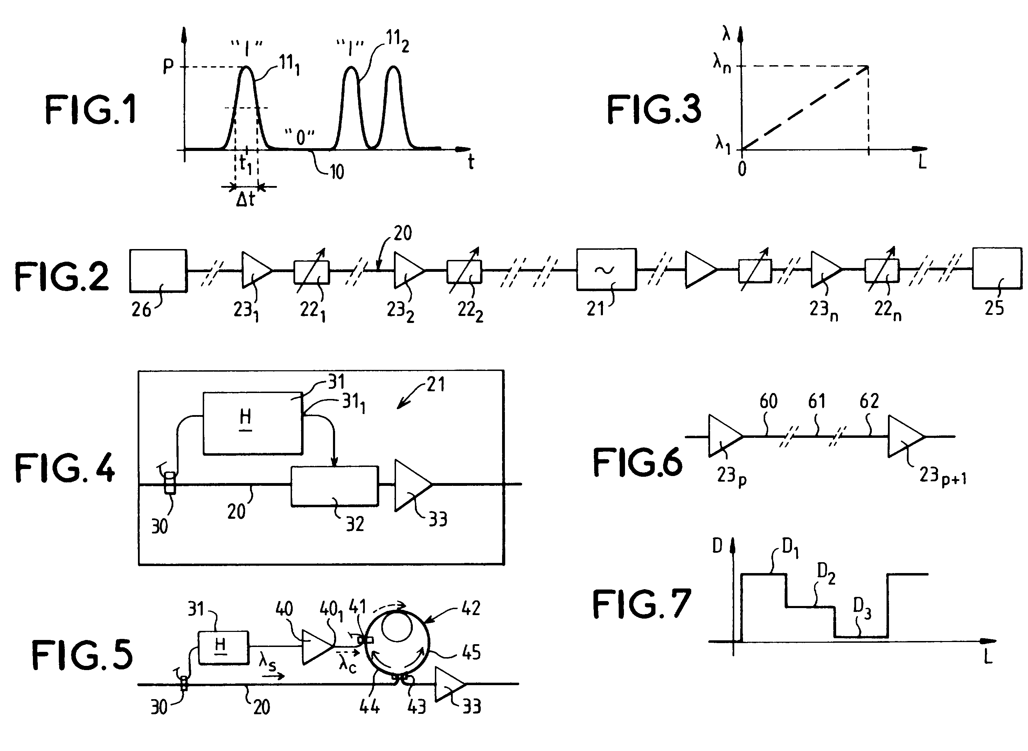

Cette installation transmet des signaux numériques composés de "0", représentés par le niveau bas 10 sur la figure 1, et de "1" représentés par des impulsions 11₁, 11₂, sur ce même diagramme de la figure 1.

Les impulsions 11₁ et 11₂ ont, en fonction du temps (qui est porté en abscisses), une largeur qui varie selon une loi bien déterminée, à savoir, la forme de l'inverse du carré d'un cosinus hyperbolique. Une telle impulsion est dénommée Soliton.

Il est connu qu'une telle forme d'impulsion se déforme peu quand elle est transmise par une fibre d'un conducteur optique 20 (figure 2). Cette absence de déformation provient du fait qu'il existe une relation précise entre la puissance crête P (figure 1) de l'impulsion Soliton et sa largeur Δt à mi-hauteur, cette relation dépendant des caractéristiques de la fibre, c'est-à-dire de la partie n₂, non linéaire, de l'indice de réfraction - qui est appelée indice de Kerr - et de la dispersion D. Cette relation est telle que les effets de la dispersion et de la non-linéarité se compensent.

Dans le mode de réalisation préféré de l'invention, qui est représenté sur la figure 2, on prévoit, d'une part, au milieu de la ligne, un modulateur de phase 21 et, d'autre part, des filtres à fréquences glissantes 22₁, 22₂ ... 22ₙ, chaque filtre étant associé à un amplificateur optique ou répéteur 23₁, 23₂ ... 23ₙ. La ligne 20 a, par exemple, une longueur de 8000 kilomètres.

Le modulateur de phase 21 - qui sera décrit plus loin, notamment en relation avec les figures 4 et 5 - permet de diminuer la gigue temporelle de l'impulsion Soliton reçue à l'extrémité de réception 25 de la ligne. Cette gigue, ou variation aléatoire, de la position temporelle t₁ de l'impulsion Soliton est essentiellement constituée par la gigue dite de "Gordon-Haus".

Partant de la constatation qu'un modulateur de phase 21 ne permet pas de compenser de façon satisfaisante les fluctuations d'amplitude A - ou gigues d'amplitude - et l'accumulation des ondes dispersives de l'impulsion Soliton, on a associé au modulateur de phase 21, les filtres glissants 22₁, 22₂ ... 22ₙ, également connus en eux-mêmes.

La longueur d'onde centrale du filtre 22₁ a une valeur λ₁ et la longueur d'onde centrale des filtres suivants augmente de façon régulière avec la distance. On a représenté sur la figure 3 la variation de la longueur d'onde centrale des filtres 22₁ ... 22ₙ en fonction de la longueur L, c'est-à-dire la distance du filtre considéré à l'émetteur 26. Dans cet exemple, la variation de la longueur d'onde λ en fonction de la longueur L est linéaire.

Dans un exemple, la longueur d'onde λ du laser d'émission est de 1555,8 nm, la longueur d'onde λ₁ est de 1555,8 nm et la longueur d'onde λₙ est de 1557 nm.

La variation de longueur d'onde centrale des filtres peut être différente de celle qui a été décrite ci-dessus. Par exemple, la longueur d'onde centrale des filtres peut diminuer avec la distance. De façon générale, il suffit que la fréquence varie avec la distance.

Le filtrage glissant permet la transmission des impulsions Soliton tout en réduisant le bruit au minimum. En effet, la variation progressive de la longueur d'onde centrale des filtres a pour résultat que chaque filtre ne laisse pas passer le bruit et les ondes dispersives apportés par les filtres les plus éloignés qui le précèdent, ces filtres étant à des longueurs d'ondes différentes. Cette technique limite la gigue en amplitude des impulsions Soliton.

Pour atteindre le même but d'amélioration du rapport signal à bruit, en variante (non représentée), à la place d'un filtrage à longueur d'onde qui varie avec la position, on prévoit des composants à absorbants saturables, de préférence des composants semi-conducteurs de type quaternaire tels qu'un composant InₓGa₍₁₋ₓ₎As_{y}P_{(1-y)} qui transmettent la lumière à la même longueur d'onde que la fibre optique utilisée, dans le conducteur 20, soit 1,55 µm environ. Ce composant à absorbant saturable est soit de type massif, soit de type en couches minces, à puits quantique.

Un composant à absorbant saturable a un effet dans le domaine temporel, et non dans le domaine spectral comme c'est le cas pour un filtre. Il absorbe les amplitudes faibles et laisse passer les fortes amplitudes. De cette manière, le bruit contenu dans les pieds de l'impulsion, c'est-à-dire le bruit pour les faibles amplitudes du signal, est absorbé par le composant.

Un composant à absorbant saturable en couches minces, c'est-à-dire à puits quantique, est décrit par exemple dans l'article, "2,4 Gbit/sec all optical pulse discrimination experiment using a high-speed saturable absorber optical gate" (Une expérience de discrimination d'impulsion entièrement optique à 2,4 Gbit/sec. utilisant une porte optique à absorbant saturable à grande vitesse) de H. Tsuda et autres - Electronics Letters du 15 février 1996, volume 32, n°4, pages 365 et 366.

La figure 4 est un schéma de principe d'un modulateur de phase. Ce modulateur comporte, d'une part, un coupleur 30 qui extrait du conducteur optique 20, une partie du signal et le délivre à un dispositif 31 qui en dérive le signal d'horloge. Le signal d'horloge, délivré sur la sortie 31₁ du dispositif 31, est un signal sinusoïdal qui est fourni à un composant de modulation 32 sur la ligne 20. L'effet de ce composant 32 est de corriger la fréquence des impulsions Soliton proportionnellement au retard par rapport aux maxima du signal d'horloge fourni par le dispositif 31.

Sur la ligne 20, le composant de modulation 32 est suivi par un amplificateur optique 33, par exemple un amplificateur à fibre dopée à l'erbium.

La figure 5 représente un exemple de modulateur de phase du type à miroir à fibres non linéaires.

Ce modulateur 21 comprend, outre le coupleur 30 et le dispositif 31, un amplificateur optique 40, par exemple aussi du type à fibre dopée à l'erbium, dont l'entrée est connectée à la sortie du dispositif 31 et dont la sortie 40₁ est reliée à un coupleur 41 qui introduit le signal de l'amplificateur 40 dans un miroir 42 à fibres non linéaires. Ce miroir 42 à fibres non linéaires reçoit le signal de la ligne 20 par l'intermédiaire d'un autre coupleur 43 du type 50-50. Ce dernier répartit de façon égale le signal provenant de la ligne 20 entre les deux branches 44 et 45 de la fibre 46 formant le composant actif du miroir 42. Le signal de sortie du miroir 42 retourne sur la ligne 20 d'où il est transmis vers l'amplificateur optique 33.

Un tel modulateur est en soi connu. Il est décrit par exemple dans un article de S. Bigo et collaborateurs de la revue Electronics Letters, volume 31, n°25 du 7 décembre 1995, pages 2191 et 2192.

Un tel modulateur effectue à la fois une modulation d'amplitude et une modulation de phase. Cette dernière est, ici, une alternance de π radians.

En variante (non montrée), à la place d'un modulateur à miroir à fibres non linéaires, on utilise un modulateur à électro-absorption qui, comme le modulateur précédemment décrit, effectue une modulation d'intensité en même temps que la modulation de phase. Un tel modulateur à électro-absorption présente un élément actif semiconducteur, par exemple à base de InₓGa₍₁₋ₓ₎As_{y}P(1-y). Dans cet élément semiconducteur, la modulation résulte à la fois d'une modification de l'indice de réfraction et de la modification du coefficient d'absorption. Cet élément est connu en lui-même. Il est décrit, par exemple, dans un article de Widdowson et collaborateurs de la revue Electronics Letters, 27 octobre 1994, volume 30, n°22, pages 1866 à 1868.

La modulation de phase peut également être obtenue à l'aide d'un composant à fibre optique d'une longueur comprise entre plusieurs centaines de mètres et plusieurs kilomètres. Sur cette fibre se propagent le signal d'horloge du dispositif 31 et le signal principal de la ligne 20. Dans ce cas, la modulation est dite de type distribué par opposition à une modulation de type discret comme celle obtenue avec un modulateur à électro-absorption. Une telle modulation à l'aide d'une fibre non linéaire est décrite, par exemple, dans l'article de Widdowson et collaborateurs de la revue "Electronics Letters", 9 juin 1994, volume 30, N°12, pages 990 et 991.

Pour diminuer encore les pertes on peut, de façon en soi connue, disposer des éléments de contrôle de dispersion sur la ligne 20. On a constaté que ce contrôle de la dispersion est compatible avec la combinaison d'une modulation de phase et d'un filtrage glissant ou d'un ensemble d'éléments absorbants saturables.

Le contrôle de la dispersion peut être effectué de deux manières. La première est un profilage de dispersion entre deux amplificateurs optiques. Ce profilage consiste à prévoir un nombre limité de fibres présentant des dispersions différentes entre deux amplificateurs, la dispersion d'ensemble simulant une décroissance exponentielle. Cette réalisation est représentée sur la figure 6 et la figure 7. Sur la figure 6, on voit qu'entre deux amplificateurs 23ₚ et 23ₚ₊₁, on prévoit des éléments de fibre optique 60, 61 et 62. L'élément 60 présente une dispersion D₁ (figure 7), l'élément 61 présente une dispersion D₂ et l'élément 62, une dispersion D₃. Pour ce profilage, on peut aussi prévoir une fibre unique présentant une dispersion qui décroît exponentiellement.

La seconde manière (non montrée) de contrôler la dispersion consiste à introduire sur la ligne, entre n (au moins deux) amplificateurs sélectionnés, au moins une fibre optique présentant une dispersion opposée à la dispersion d'ensemble des fibres en amont. Cette fibre compensatrice peut également être disposée en plusieurs endroits sur la ligne.

Quel que soit le mode de réalisation, on a constaté qu'un système de transmission en format Soliton à filtrage glissant, ou à absorbants saturables, combiné à une modulation de phase, par exemple un modulateur en milieu de ligne, assure une déformation minimale de l'impulsion Soliton et permet des performances élevées de débit, supérieures à 10 Gbits/s, notamment de 20 Gbits/s, voire 100 Gbits/s ou plus. En outre, la distance entre deux répéteurs est élevée ; elle est supérieure à 100 kilomètres. Cette dernière propriété est favorable à la réalisation d'un tel système à faible coût.

Les exemples décrits ci-dessus se rapportent à la transmission d'une seule longueur d'onde optique sur la ligne 20. Cependant, l'invention s'applique au cas où la ligne transmet des longueurs d'ondes optiques de valeurs différentes, émises par des sources différentes. Dans ce cas, le filtrage glissant sera réalisé par des filtres de type Fabry-Pérot dont chacun présente plusieurs pics de transmission correspondant aux longueurs d'ondes des sources génératrices de signal. Par ailleurs, dans ce cas, il faudra positionner le ou les modulateurs de phase - ou choisir des longueurs d'ondes optiques - de façon telle que toutes les longueurs d'ondes optiques arrivent au même moment.

## Revendications

1. Système de transmission de signaux numériques sur une longue distance à l'aide d'un conducteur optique (20), les signaux étant sous la forme d'impulsions Soliton (11), ce système comprenant des moyens pour minimiser les déformations des impulsions Soliton transmises, caractérisé en ce que lesdits moyens de minimisation comprennent, en combinaison, d'une part, un modulateur de phase (21) s'opposant à la gigue temporelle de l'impulsion (11), et, d'autre part, pour s'opposer à l'altération du rapport signal à bruit de l'impulsion, un ensemble de filtres (22₁ ..., 22ₙ) du type à fréquence variable avec l'emplacement dudit filtre, ou un ensemble d'éléments à absorbants saturables.

2. Système selon la revendication 1, caractérisé en ce que le modulateur de phase (21) comprend un dispositif (31) de récupération de signal d'horloge et un composant de modulation (32) recevant le signal principal sur l'une de ses entrées, et le signal d'horloge, provenant dudit dispositif (31), sur une autre de ses entrées.

3. Système selon la revendication 1 ou 2, caractérisé en ce que le modulateur de phase est du type à modulation à électro-absorption.

4. Système selon la revendication 3, caractérisé en ce que le modulateur à électro-absorption comporte un composant semiconducteur tel qu'un composé quaternaire du type InₓGa₍₁₋ₓ₎AS_{y}P_{(1-y)}.

5. Système selon la revendication 1 ou 2, caractérisé en ce que le modulateur de phase comprend un miroir à fibres non linéaires.

6. Système selon la revendication 1 ou 2, caractérisé en ce que le modulateur de phase (21) comprend un modulateur de phase à éléments optiques non linéaires le long duquel l'impulsion d'horloge et l'impulsion sur la ligne (20) se propagent ensemble sur une longueur déterminée.

7. Système selon l'une quelconque des revendications précédentes, caractérisé en ce que chaque filtre (22₁), ou chaque élément absorbant saturable, est associé à un répéteur, de préférence un amplificateur optique (23).

8. Système selon l'une quelconque des revendications précédentes, caractérisé en ce que, dans le cas de l'utilisation d'éléments à absorbants saturables, chacun de ces derniers est du type à semiconducteur, notamment à composant quaternaire tel que InₓGa₍₁₋ₓ₎As_{y}P_{(1-y)}.

9. Système selon l'une quelconque des revendications précédentes, caractérisé en ce qu'il comporte, en outre, des moyens de contrôle de la dispersion.

10. Système selon la revendication 9, caractérisé en ce que les moyens de contrôle de la dispersion comportent, entre deux répéteurs successifs, une fibre ou un ensemble de fibres (60, 61, 62) conférant un profil déterminé de dispersion.

11. Système selon la revendication 9, caractérisé en ce qu'il comporte, sur la ligne (20), au moins un élément de correction de la dispersion.

12. Système selon l'une quelconque des revendications précédentes, caractérisé en ce que le débit de données est d'au moins 10 Gbits/s.

13. Système selon l'une quelconque des revendications précédentes, caractérisé en ce que la distance entre deux répéteurs est d'au moins 100 kilomètres.

14. Application du système selon l'une quelconque des revendications précédentes à la transmission de signaux à l'aide de câbles immergés.
